(19) Europäisches Patentamt

European Patent Office

Office européen des brevets

(11) **EP 0 927 447 B1**

(12) **EUROPÄISCHE PATENTSCHRIFT**

(45) Veröffentlichungstag und Bekanntmachung des Hinweises auf die Patenterteilung:
**27.03.2002 Patentblatt 2002/13**

(21) Anmeldenummer: 97943778.7

(22) Anmeldetag: **16.09.1997**

(51) Int Cl.⁷: **H02H 7/085**

(86) Internationale Anmeldenummer:
**PCT/DE97/02079**

(87) Internationale Veröffentlichungsnummer:
**WO 98/12787 (26.03.1998 Gazette 1998/12)**

(54) **STELLANTRIEB, INSBESONDERE ELEKTROMOTOR-GETRIEBE-ANTRIEB, ZUR BEWEGUNG VON FREMDKRAFTBETÄTIGTEN SCHLIESSTEILEN**

ACTUATOR, IN PARTICULAR AN ELECTRIC MOTOR GEAR DRIVE SYSTEM, FOR MOVING CLOSURE PARTS OPERATED BY EXTRANEOUS FORCE

MECANISME DE COMMANDE, NOTAMMENT MECANISME D'ENTRAINEMENT A ENGRENAGES COMMANDE PAR MOTEUR ELECTRIQUE, POUR DEPLACER DES ELEMENTS DE FERMETURE ACTIONNES PAR FORCE EXTERIEURE

(84) Benannte Vertragsstaaten:
**DE ES FR IT**

(30) Priorität: **21.09.1996 DE 19638781**

(43) Veröffentlichungstag der Anmeldung:
**07.07.1999 Patentblatt 1999/27**

(73) Patentinhaber: **SIEMENS AKTIENGESELLSCHAFT**
**80333 München (DE)**

(72) Erfinder: **KOESTLER, Werner**
**A-1180 Wien (AT)**

(56) Entgegenhaltungen:
**DE-A- 3 303 590      DE-A- 19 514 954**
**DE-C- 4 339 365      US-A- 5 334 876**

EP 0 927 447 B1

**Beschreibung**

Die Erfindung bezieht sich auf einen Stellantrieb, insbesondere Elektromotor-Getriebe-Antrieb, zur Bewegung von fremdkraftbetätigten Schließteilen gemäß Patentanspruch 1.

Stellantriebe der vorgenannten Art werden insbesondere als Fensterheber- bzw. Schiebedachantriebe in Kraftfahrzeugen eingesetzt und enthalten einen Elektromotor, insbesondere Kommutatormotor, dessen Rotorwelle als Getriebewelle mit einem Schneckenrad kämmt, von dem das jeweilige Schließteil angetrieben wird; ein Elektromotor-Getriebe-Stellantrieb für ein Fenster in einem Kraftfahrzeug ist z.B. durch DE-U-89 03 714 bekannt.

Für einen wirksamen Einklemmschutz zwischen einem durch eine motorische Fremdkraftbetätigung schließenden Fenster- bzw. Schiebedach und einem zur Gegenanlage kommenden Hindernis sind im zunehmenden Masse strengere Vorschriften zu erfüllen; entsprechend diesen Vorschriften muß u.a. der Schließvorgang abgebrochen bzw. das Fenster, die Trennwand oder das Dachteilsystem in umgekehrter Bewegungsrichtung angetrieben werden, bevor es/sie eine Kraft von 100 Newton oder mehr ausübt auf eine halbstarre, zylindrische Stange mit einem Durchmesser von 4mm bis 200mm, die ein bestimmtes Kraftdurchbiegungsmaß aufweist und die als Hindernis durch die Fenster-, Trennwand- oder Dachteilsystemöffnung an irgend einer Stelle durchgeschoben wird.

Durch die DE-C2-33 03 590 ist ein elektromotorisch angetriebener Fensterheber für Automobile oder ähnliche Kraftfahrzeuge mit einer Einklemmschutz-Sicherheitsschaltung bekannt, wobei der Fensterheber einen elektronischen Leistungmesser zur ständigen Messung der Leistungsaufnahme des Antriebsmotors enthält und in einem Programmspeicher ein Leistungs-Hubweg-Diagramm abgelegt ist; dem Leistungs-Hubweg-Diagramm ist eine Leistungs-Toleranzgrenze zugeordnet, derart daß beim Auftreten einer die vorgegebene Toleranzgrenze übersteigenden Leistung die Stromflußrichtung am antreibenden Elektromotor unterbrochen bzw. umgekehrt wird. Damit beim Einlauf z.B. der Scheibe eines Kraftfahrzeug-Fensterheberantriebes gegen den oberen Scheibenrahmen und den dadurch verursachten Anstieg der Motorleistung die Sicherheitsschaltung nicht ungewollt anspricht, ist entweder ein besonderer Schalter notwendig, der die Einklemmschutz-Sicherheitsschaltung bei Erreichen dieser Stellung abschaltet, oder es wird für die durch einen Impulsgeber festgestellte letzte Wegstrecke eine solch hohe Toleranzgrenze vorgegeben, daß die Einklemmschutz-Sicherheitsschaltung nicht ansprechen kann.

Durch die DE 31 36 746 C2 ist ein Verfahren zur elektronischen Überwachung des Öffnungs- und Schließvorganges von Fensterhebern und Schiebedächern in Kraftfahrzeugen bekannt, bei dem der gesamte Hubweg in drei Bereiche derart unterteilt wird, daß im ersten und dritten Bereich der Stellantrieb abschaltet, wenn im Blockierzustand ein zeitlicher Grenzwert erreicht wird, sowie im zweiten Bereich von der Drehzahl oder der Geschwindigkeit des Stellantriebes Meßwerte laufend ermittelt werden, mit einem auf den Anfangsmeßwert des ersten Bereichs bezogenen Grenzwert verglichen werden und bei Grenzwert-Überschreitung zum Abschalten bzw. Reversieren des Stellantriebes führen.

Durch die DE 195 14 954 A1 ist ein Stellantrieb zur Bewegung eines Fahrzeugfensters bekannt, bei der eine Schließkraftbegrenzung im Fall eines Anlaufs des Fensters gegen ein Hindernis erfolgt. Die Schließkraftbegrenzung wird durch Erfassen des Motorstroms und des Hubweges des Fensters realisiert; bei Erreichen von sich adaptierenden Grenzwerten wird der Antrieb abgeschaltet bzw. reversiert, wobei die Grenzwerte derart definiert sind, daß für jede Position des Fensters ein bestimmter Motorstrom abgespeichert ist.

Gemäß vorliegender Erfindung kann ein demgegenüber mit geringerem regeltechnischem bzw. meßtechnischem Aufwand arbeitender, die Schließzeit des Schließteils nicht unnötig verlangsamender da an die jeweiligen baulichen bzw. betrieblichen Gegebenheiten anpaßbarer Stellantrieb mit Einklemmschutz dadurch geschaffen werden, daß unter Notwendigkeit lediglich eines Meßgliedes in Form eines drehzahlabhängigen Wegsensors der zur Schließkraftbegrenzung maßgebliche Grenzwert der Drehzahl bzw. Umdrehungsdauer einer Antriebswelle des Stellantriebs durch Berücksichtigung der für den jeweiligen Antrieb je Position des Hubweges gemessenen Antriebsenergie und der in Abhängigkeit vom Hubweg abgespeicherten Schwergängigkeit in seinem Abstand zum jeweils augenblicklichen Meßwert variabel anpaßbar sowie eine Aktualisierung, insbesondere in Anpassung an alterungsbedingte Änderungen des Schließsystems über dessen Hubweg, des Verlaufs des Grenzwertes G1;G2 = f(h) vorgesehen ist, derart daß der zugehörige Verlauf der jeweils aktuell gemessenen Antriebsenergie über dem Hubweg von einem unterhalb des Verlaufs des Grenzertes liegenden Toleranzband eingeschlossen und ein gemessener Wert bei Überschreiten einer Toleranzgrenze und bei Nichterreichen des Grenzwertes innerhalb des Toleranzbandes zurückverlegt ist.

Zweckmäßigerweise ist dazu eine Definition des Grenzwertes unter Zugrundelegung eines Schwergängigkeits-Multiplikators vorgesehen, der die jeweils relative Schwergängigkeit $S1/52$ des Stellantriebes als Funktion des Hubweges berücksichtigt, wobei $S1$ den für jeweils jeden Stellantrieb je Position des Hubweges ermittelten Schwergängigkeitswert und $S2$ einen je Stellantrieb-Typ festgelegten konstanten Schwergängigkeitswert wiedergibt; weitere vorteilhafte Ausgestaltungen der Erfindung sind jeweils Gegenstand der Unteransprüche.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:

FIG 1     den schematischen Aufbau eines Fensterheberantriebes in einem Kraftfahrzeug mit den bei Bewegung des Fensters angreifenden Kräften;

FIG 2     den Funktionsverlauf der Umdrehungsdauer einer Antriebswelle in Abhängigkeit vom Hubweg des Fensters als akutelles Meßergebnis bzw. als davon ausgehender, durch Berücksichtigung der jeweiligen Antriebsenergie und der relativen Schwergängigkeit abgeleiteter Grenzwert jeweils für den Fall einer beispielhaften Leichtgängigkeit bzw. Schwergängigkeit;

FIG 3     den Funktionsverlauf einer abgespeicherten Erfassung der relativen Schwergängigkeit eines Fensters;

FIG 4     die Aktualisierung des Grenzwertes bei Überschreiten von Toleranzgrenzen eines dessen Verlauf einfassenden Toleranzbandes.

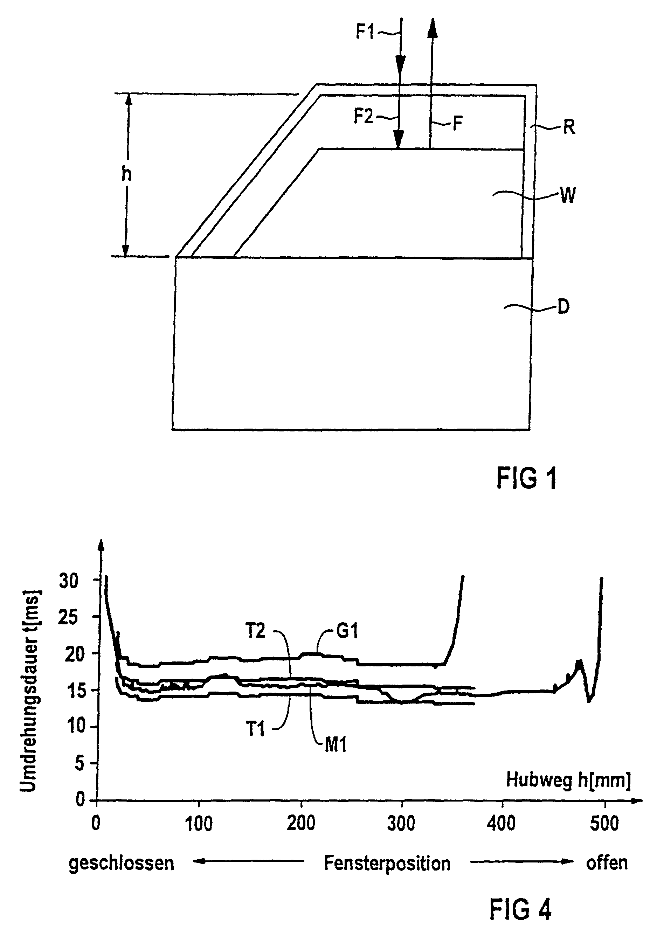

FIG 1 zeigt eine Kraftfahrzeugtür T mit einer in dessen Fensterrahmen R über einen Hubweg h zwischen einer Fensterposition "Offen" und einer Fensterposition "Geschlosen" auf- bzw. abwegbaren Fensterscheibe W. In dem dargestellten Kräftegleichgewicht ist die gesamte Antriebskraft F zur Bewegung der Fensterscheibe W über ihren Hubweg h dargestellt; die gesamte Antriebskraft F des Stellantriebes, insbesondere dessen Elektromotor, ergibt sich aus der jeweils zu überwindenden, durch die jeweilige Schwergängigkeit bestimmten Reibungsfrakt F1 und der zulässigen Schließkraft F2.

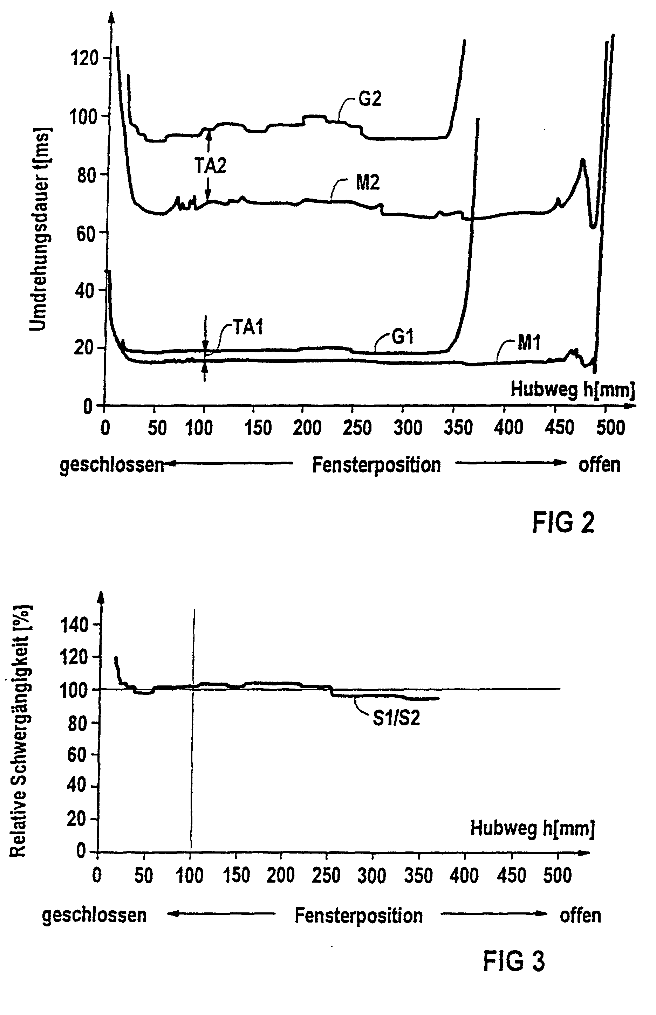

FIG 2 zeigt die funktionelle Abhängigkeit der Umdrehungsdauer einer Antriebswelle des Stellantriebes, insbesondere des Elektromotors, vom jeweiligen Hubweg h, d.h. der jeweiligen Fensterposition zwischen "Offen" einerseits und "Geschlossen" andererseits jeweils für einen Beispielsfall einer Schließteilbewegung mit geringer Schwergängigkeit, d.h. Leichtgängigkeit, gemäß Funktionsverlauf des jeweiligen Meßwertes M1 und für einen Beispielsfall mit hoher Schwergängigkeit gemäß Funktionsverlauf des jeweiligen Meßwertes M2.

Die jeweilige Umdrehungsdauer wird zweckmäßigerweise durch einen an sich vorhandenen Wegsensor, insbesondere einen vom Rotor des Elektromotors, z.B. mittels eines mitrotierenden Polrades, induzierten Drehzahlsensors, insbesondere in Form eines Hallwandlers, gewonnen. Mit Hilfe der derart jeweils je Position des Hubweges h gemessenen Drehzahl n bzw. Umdrehungsdauer t sowie der Speisespannung U, z.B. einer einen Fensterheberantrieb antreibenden Kraftfahrzeug-Batterie, kann in einer Steuereinheit mittels weiterer abgelegter fester Stellantriebsparameter wie der Nennspannung $U_0$, dem Leerlaufstrom $I_0$ sowie der

Leerlaufdrehzahl $n_0$ des Elektromotors die jeweils drehzahlabhängige Verlustleistung P des Motors, die repräsentativ für die jeweilige Antriebsenergie ist, gemäß folgenden Vorgaben bestimmt werden:

$$P = (U - U_{EMK})^2/R_i$$

$$U_{EMK} = n \cdot K$$

$$K = (U_o - I_o\, R_o)/n_o$$

In besonders einfacher Weise kann die für die Bestimmung der Verlustleistung und somit der Antriebsenergie des Stallantriebes von einem Wert der Batteriespannung in Form ihres konstanten Nenn- bzw. Maximalwertes ausgegangen werden; zur weiteren Erhöhung der Empfindlichkeit des erfindungsgemäßen Einklemmschutzes ist nach einer Ausgestaltung der Erfindung vorgesehen, einen während der Betriebszeit jeweils aktualisierten Wert der Batteriespannung U zugrundezulegen.

Die jeweiligen Verläufe der Grenzwerte G1 bzw.G2, bei denen zur Gewährleistung eines Einklemmschutzes der Stellantrieb vorzugsweise abschaltet bzw. reversiert, ergeben sich ausgehend von den Funktionsverläufen der jeweiligen aktuellen Meßwerte M1 bzw.M2 unter Berücksichtigung der Reduzierung der gemessenen Antriebsenergie im Sinne einer Einhaltung der zulässigen Einklemmkraft bei Einbeziehung der in FIG 3 hinsichtlich ihres Funktionsverlaufs dargestellten und abgespeicherten relativen Schwergängigkeit S1/S2 des Stellantriebes, wobei S1 den für jeweils jeden Stellantrieb je Position des Hubweges h ermittelten Schwergängigkeitswert und S2 einen je Stellantrieb-Typs festgelegten konstanten Schwergängigkeitswert wiedergibt. Der Funktionsverlauf der relativen Schwergängigkeit ist zweckmäßigerweise bei Erstinstallation eines, z.B. in eine Tür eines Kraftfahrzeuges eingebauten, Stellantriebs ermittelt und in einer hier nicht näher dargestellten Steuervorrichtung abgespeichert.

Der Anteil der in Abhängigkeit von der im Schließsystem aufgrund unterschiedlicher Umdrehungsdauer sich jeweils ergebenen kinetischen Energie, der ansonsten am eingeklemmten Objekt einen unerwünschten bzw. unzulässigen Anstieg der Einklemmkraft bewirkt, muß im Fall eines Einklemmschutzes zunächst vernichtet werden; demzufolge liegt der Grenzwert G1 bei Leichtgängigkeit und somit einem schnellen Schließvorgang mit hoher gespeicherter kinetischer Energie näher an dem jeweilgien aktuellen Meßwert M1 als der Grenzwert G2 bei Schwergängigkeit und somit langsamen Schließen mit geringer gespeicherter kinetischer Energie gemäß dem jeweiligen Meßwert M2. Wie insbesondere anhand der in den Funktionsverläufen gemäß FIG 2,3 herausgestellten Position des Hubwegs von h = 100mm erkennbar, ergibt sich in vorteilhafter Weise abhängig von der jeweiligen gemessenen Antriebsenergie und der Einzelfall-Schwergängigkeit eine unterschiedliche, individuell angepaßte Stauchung des Grenzwertes G1 bzw.G2 in Bezug auf den zugehörigen jeweiligen Meßwert M1 bzw.M2 entsprechend den unterschiedlichen Toleranzabständen TA1 bzw.TA2.

Um alterungsbedingte Änderungen im Verhalten des Schließsystems im Verlauf eines Hubwegdurchganges - z.B. durch unterschiedlichen Verschleiß einer bewegungshindernden Dichtungsführung über den Hubweg einer Kraftfahrzeug-Fensterscheibe - zu erfassen, ist nach einer Ausgestaltung der Erfindung eine aktualisierte Anpassung des Verlaufs des Grenzwertes G1 bzw. G2 derart vorgesehen, daß - wie anhand von FIG 3 hinsichtlich des Grenzwertes G1 erläutert - der Verlauf des aktuell gemessenen Wertes M1 der Umdrehungsdauer über dem Hubweg h von einem unterhalb des Verlaufs des Grenzwertes G1 liegenden Toleranzbandgrenzen T1-T2 mit einer unteren Toleranzbandgrenze T1 und einer oberen Toleranzbandgrenze T2 eingeschlossen und ein gemessener Wert bei Überschreiten einer Toleranzbandgrenze und bei Nichterreichen des Grenzwertes G1 bzw.G2 nach dicht unterhalb der überschnittenen Toleranzbandgrenze T1 bzw.T2 zurückverlegt ist; der Wert der zurückverlegenden Änderung sollte dabei nur sehr gering sein. Der Verlauf der Toleranzbandgrenzen T1 bzw. T2 ist derart abgespeichert, daß er im wesentlichen dem Verlauf des zugehörigen Grenzwertes unter Berücksichtigung der zum Beginn des Toleranzbandes bei einer Öffnungsbewegung des Schließteils gegebenen Speisespannung des Elektromotors des Stellantriebes entspricht.

**Patentansprüche**

1.    Stellantrieb, insbesondere Elektromotor-Getriebe-Antrieb, zur Bewegung von fremdkraftbetätigten Schließteilen, insbesondere Fenstern, Trennwänden bzw. Dachteilsystemen in Kraftfahrzeugen, über einen Hubweg (h)

-    mit einer Schließkraftbegrenzung im Falle eines Anlaufs des Schließteils gegen ein Hindernis;

-    mit einer Schließkraftbegrenzung, insbesondere durch Abschalten bzw. Reversieren, bei Erreichen eines Grenzwertes (G1;G2) der Drehzahl (n) bzw. der Umdrehungsdauer (t) einer Antriebswelle des Stellantriebes;

-    mit einer Definition des Grenzwertes (G1;G2) aufgrund der jeweiligen Antriebsenergie je Position des Hubweges (h) unter Berücksichtigung des je Position des Hubweges (h) abgespeicherten Bewegungswiderstandes des Stellantriebes;

-    mit einer Aktualisierung des Verlaufs des Grenzwertes G1;G2 = f(h), derart daß der zugehörige Verlauf der jeweils aktuell gemessenen Antriebsenergie über dem Hubweg (h) von einem unterhalb des Verlaufs des Grenzertes (G1 bzw.G2) liegenden Toleranzbandgrenze (T1 bzw.T2) eingeschlossen und jeweils ein aktuell gemessener Wert bei Überschreiten einer Toleranzbandgrenze (T1 bzw.T2) und bei Nichterreichen des Grenzwertes (G1 bzw.G2) dicht innerhalb der überschrittenen Toleranzbandgrenze (T1 bzw.T2) zurückverlegt ist.

2.    Stellantrieb nach Anspruch 1

-    mit einer Definition des Grenzwertes (G1;G2) unter Zugrundelegung eines Bewegungswiderstand-Multiplikators, der die jeweils relative Schwergängigkeit S1/S2 des Stellantriebes berücksichtigt, wobei S1 den für jeweils jeden Stellantrieb je Position des Hubweges (h) ermittelten Schwergängigkeitswert und S2 eine je Stellantrieb-Typ festgelegten konstanten Schwergängigkeitswert wiedergibt.

3.    Stellantrieb nach zumindest einem der vorhergehenden Ansprüche

-    mit einer Definition der Antriebsenergie in Abhängigkeit von der an der Wicklungsimpedanz des Elektromotors des Stellantriebes betriebsmäßig erzeugten, mittels der jeweiligen Motordrehzahl (n) bzw. der Umdrehungsdauer (t) sowie der Speisespannung (U) des Elektromotors bestimmbaren Verlustleistung.

4.    Stellantrieb nach Anspruch 3

-    mit aus der Wicklungsimpedanz des Elektromotors sowie dessen Speisespannung (U) unter Berücksichtigung der an der verlustlos angenommenen Motorwicklung induzierten generatorischen Spannung ($U_{EMK}$) des Elektromotors gemäß $P = (U - U_{EMK})^2/R_i$ bestimmten Verlustleistung (P) mit $U_{EMK} = n \cdot K$, wobei n die jeweilige Motordrehzahl und K eine Motorkonstante bedeuten, die gemäß der Beziehung $K = (U_o - I_oR_o)/n_o$ mit $U_o$ = Nennspannung des Elektromotors; $I_o$ = Leerlaufstrom des Elektromotors; $n_o$ = Leerlaufdrehzahl des Elektromotors bestimmt ist.

5.    Stellantrieb nach zumindest einem der vorhergehenden Ansprüche

-    mit einer Erfassung der Drehzahl (n) bzw. der Umdrehungsdauer (t) des Elektromotors durch zumindest einen an sich vorhandenen Hubweg-Sensors, insbesondere Drehzahlsensor.

**6.** Stellantrieb nach zumindest einem der Ansprüche 3-5

- mit einem jeweils aktuell gemessenen Wert der Speisespannung (U), insbesondere einer Kraftfahrzeug-Batteriespannung.

## Claims

**1.** Actuator, in particular an electric motor geared drive, for moving power-operated closure parts, in particular windows, partitions or roof subsystems in motor vehicles, over a travel path (h)

- having a closing force limitation when the closure part runs up against an obstacle;
- having a closing force limitation, in particular by switching off or reversing, when a drive shaft of the actuator reaches a limiting value (G1; G2) of the speed (n) or of the duration of rotation (t);
- having a definition of the limiting value (G1; G2) based on the respective drive energy for each position of the travel path (h) while taking account of the stored kinetic resistance of the actuator for each position of the travel path (h); and
- having updating of the profile of the limiting value G1; G2 = f(h) in such a way that the associated profile of the drive energy respectively currently measured against the travel path (h) is enclosed by a tolerance band limit (T1 or T2) situated below the profile of the limiting value (G1 or G2), and when a tolerance band limit (T1 or G2) is overshot and the limiting value (G1 or G2) is not reached a currently measured value is set back in each case just inside the overshot tolerance band limit (T1 or T2).

**2.** Actuator according to Claim 1

- having a definition of the limiting value (G1; G2) based on a kinetic resistance multiplier which takes account of the respective relative sluggishness S1/S2 of the actuator, S1 representing the sluggishness value determined in each case for each actuator for each position of the travel path (h), and S2 representing a constant sluggishness value fixed for each type of actuator.

**3.** Actuator according to at least one of the preceding claims,

- having a definition of the drive energy as a function of the power loss which is produced operationally at the winding impedance of the electric motor of the actuator and can be determined by means of the respective motor speed (n) or the duration of rotation (t) as well as the feed voltage (U) of the electric motor.

**4.** Actuator according to Claim 3,

- having a power loss (P) determined from the winding impedance of the electric motor and the feed voltage (U) thereof while taking account of the generator voltage ($U_{EMK}$), induced on the motor winding (assumed to have no losses), of the electric motor in accordance with P = $(U-U_{EMK})^2/R_i$ where $U_{EMK}$ = n.K, it being the case that n denotes the respective motor speed and K a motor constant which is determined in accordance with the relationship K = $(U_0-I_0R_0)/n_0$ where $U_0$ = nominal voltage of the electric motor; $I_0$ = idle idle current of the electric motor; and $n_0$ = idling speed of the electric motor.

**5.** Actuator according to at least one of the preceding claims

- having a determination of the speed (n) or the duration of rotation (t) of the electric motor by means of at least one travel path sensor present per se, in particular a speed sensor.

**6.** Actuator according to at least one of Claims 3-5

- having a currently measured value in each case of the feed voltage (U), in particular a motor vehicle battery voltage.

## Revendications

**1.** Mécanisme d'actionnement, notamment mécanisme d'entraînement et de transmission à moteur électrique, pour déplacer sur une course (h) des éléments de fermeture actionnés par force extérieure, notamment des vitres, des cloisons séparatrices ou des systèmes d'éléments de toit dans des véhicules automobiles,

- avec une limitation de la force de fermeture si l'élément de fermeture rencontre un obstacle ;
- avec une limitation de la force de fermeture, notamment par désactivation ou inversion, à l'atteinte d'une valeur (G1;G2) limite de la vitesse (n) de rotation ou de la durée (t) de rotation d'un arbre d'entraînement du mécanisme d'actionnement ;
- avec une définition de la valeur (G1;G2) limite sur la base de l'énergie d'entraînement respective pour chaque position dans la course (h), en tenant compte de la résistance au déplacement du mécanisme d'actionnement mémorisée pour chaque position dans la course (h) ;

-   avec une actualisation de la courbe de valeur limite G1;G2 = f(h) de telle sorte que la courbe associée, sur la course (h), de l'énergie d'entraînement respective instantanément mesurée est incluse entre des limites (T1, T2) d'une bande de tolérance située en dessous de la courbe de la valeur (G1, G2) limite, et qu'une valeur respective instantanément mesurée est, en cas de dépassement d'une limite (T1, T2) de bande de tolérance et de non atteinte de la valeur (G1, G2) limite, reculée juste à l'intérieur de la limite (T1, T2) de bande de tolérance dépassée.

**2.** Mécanisme d'actionnement suivant la revendication 1,

-   avec une définition de la valeur (G1;G2) limite sur la base d'un multiplicateur de résistance au déplacement qui tient compte de la dureté S1/S2 relative d'actionnement respective du mécanisme d'actionnement, S1 représentant la valeur de dureté d'actionnement déterminée pour le mécanisme d'actionnement respectif pour chaque position dans la course (h), et S2 représentant une valeur constante de dureté d'actionnement, définie pour chaque type de mécanisme d'actionnement.

**3.** Mécanisme d'actionnement suivant au moins l'une des revendications précédentes,

-   avec une définition de l'énergie d'entraînement en fonction de la perte de puissance produite en service à l'impédance de bobinage du moteur électrique du mécanisme d'actionnement, perte qui peut être déterminée au moyen de la vitesse (n) de rotation respective ou encore de la durée (t) de rotation ainsi que de la tension (U) d'alimentation du moteur électrique.

**4.** Mécanisme d'actionnement suivant la revendication 3,

-   avec une perte (P) de puissance déterminée, à partir de l'impédance de bobinage du moteur électrique et de sa tension (U) d'alimentation et en tenant compte de la tension ($U_{EMK}$) génératrice du moteur électrique qui est induite au bobinage de moteur supposé exempt de perte, suivant l'équation $P = (U - U_{EMK})^2/R_i$, avec $U_{EMK} = n \cdot K$, où n est la vitesse de rotation respective du moteur et K une constante du moteur qui est déterminée suivant la relation $K = (U_0 - I_0 R_0)/n_0$, avec $U_0$ = tension nominale du moteur électrique ; $I_0$ = courant à vide du moteur électrique ; $n_0$ = vitesse de rotation à vide du moteur électrique.

**5.** Mécanisme d'actionnement suivant au moins l'une des revendications précédentes,

-   avec une détection de la vitesse (n) de rotation ou de la durée (t) de rotation du moteur électrique par au moins un capteur de course en soi présent, notamment un capteur de vitesse de rotation.

**6.** Mécanisme d'actionnement suivant au moins l'une des revendications 3 à 5,

-   avec une valeur respective instantanément mesurée de la tension (U) d'alimentation, notamment d'une tension de batterie de véhicule automobile.

FIG 1

FIG 4

7

FIG 2

FIG 3